# EUROPÄISCHE PATENTSCHRIFT

(11) **EP 2 001 580 B1**
(45) Veröffentlichungstag und Bekanntmachung des Hinweises auf die Patenterteilung: **09.06.2010**
(21) Anmeldenummer: 07726832.4
(22) Anmeldetag: 13.03.2007
(51) Int. Cl.: B01F 5/06, B05C 17/005, B29B 7/32

(54) **STATISCHER MISCHER UND VERFAHREN ZUR HERSTELLUNG EINES SOLCHEN**
STATIC MIXER, AND PROCESS FOR PRODUCING THE SAME
MÉLANGEUR STATIQUE ET SON PROCÉDÉ DE FABRICATION

(30) Priorität: 24.03.2006 EP 06111728; 25.07.2006 EP 06117803
(43) Veröffentlichungstag der Anmeldung: 17.12.2008
(73) Patentinhaber: Stamixco AG, 8474 Dinhard (CH)
(72) Erfinder: SCHNEIDER, Gottlieb, CH-8472 Seuzach (CH)
(74) Vertreter: Dr. Graf & Partner
(86) Internationale Anmeldenummer: PCT/EP2007/052326
(87) Internationale Veröffentlichungsnummer: WO 2007/110316

(56) Entgegenhaltungen:
- CH-A5- 627 263
- DE-A1- 2 522 106
- DE-A1- 2 525 020
- US-B1- 6 394 644
- ZALC J M ET AL: "MIXING DYNAMICS IN THE SMX STATIC MIXER AS A FUNCTION OF INJECTION LOCATION AND FLOW RATIO" POLYMER ENGINEERING & SCIENCE, WILEY, HOBOKEN, NJ, US, Bd. 43, Nr. 4, April 2003 (2003-04), Seiten 875-890, XP001145137 ISSN: 0032-3888

## Beschreibung

Die Erfindung betrifft einen statischen Mischer gemäss dem Oberbegriff von Anspruch 1. Die Erfindung betrifft weiter ein Verfahren zum Herstellen eines statischen Mischers gemäss dem Oberbegriff von Anspruch 12.

Statische Mischer beziehungsweise statische Mischelemente kommen im Allgemeinen dann zur Anwendung, wenn zwei oder mehr Ströme aus fliessfähigen Stoffen mit einem kontinuierlichen Inline-Verfahren zu einem im Wesentlichen homogenen Stoffstrom vermischt werden sollen.

Es ist eine Vielzahl statischer Mischer bekannt. Zunehmend an Bedeutung gewinnen sogenannte Einweg-Statikmischer, auch "Einwegmischer" oder "Wegwerfmischer" genannt, mit welchen beispielsweise Zweikomponenten-Klebstoffe gemischt werden. Derartige Mischer sollten sehr kostengünstig herstellbar sein und trotzdem ein ausgezeichnetes Mischverhalten aufweisen.

Das Dokument EP 1 125 626 A1 offenbart einen Einwegmischer, welcher aus einem Kunststoffrohr mit einer lose eingeschobenen einstückigen Mischeinheit aus Kunststoff besteht. Dieser Einwegmischer kann preisgünstig durch Spritzgiessen aus Kunststoff hergestellt werden. Nachteilig an diesem Einwegmischer ist die Tatsache, dass die Mischresultate bei einzelnen Anwendungen ungenügend sind, da die geometrische Ausgestaltung der mischwirksamen Komponenten strömungsmässig ungünstig sind, z.B. Umlenkungen der Strömung um 90° mit scharfen Ecken, in denen das Material liegen bleibt und somit strömungsmässig Toträume darstellen. Ein weiterer Nachteil ist die Tatsache, dass in diesem Einwegmischer mischresistente Strömungsfäden entstehen können, das heisst Strömungsfäden, welche die Mischstruktur durchlaufen und dabei praktisch keine oder eine nur geringe Vermengung mit benachbarten Strömungsfäden aufwiesen. Im Weiteren ist bei diesem Einwegmischer die Mischfähigkeit von Flüssigkeitssystemen, dessen Komponenten einen erheblichen Viskositätsunterschied aufweisen oder bei denen nur ein kleiner Additivstrom in den Hauptstrom einzumischen ist, begrenzt.

Das Dokument DE 101 55 045 offenbart einen statischen Mischer, der durch Schneiden und Umformen aus einem ebenen Materialband hergestellt ist. Dieser Mischer weist ein schlechtes Mischverhalten auf, indem beispielsweise mischresistente Strömungsfäden entstehen können.

Die Dokumente US 6,394,644 und DE 198 13 600 offenbaren weitere statische Mischer bestehend aus mehreren Mischermodulen. Diese statischen Mischer weisen den Nachteil auf, dass deren Herstellung relativ teuer ist.

Mischelemente weisen in der Regel eine stark bevorzugte Mischrichtung über den Strömungsquerschnitt auf. Die Mischrichtung von jeweils um 90° versetzt angeordneten Mischelemente können mit Richtungen N (Nord), S (Süd), E (Ost) und W (West) bezeichnet werden. Jedes Mischelement weist somit eine Mischerstruktur auf, welche somit bevorzugt in Richtung Nord-Süd oder Ost - West und umgekehrt mischt. Damit eine gleichmässige Durchmischung über den gesamten Strömungsquerschnitt gewährleistet ist, werden daher die im Strömungskanal hintereinander angeordneten, benachbarten Mischelemente abwechslungsweise gegeneinander um 90° versetzt beziehungsweise verdreht.

Die in den beiden Dokumenten DE 101 55 045 und DE 198 13 600 offenbarten statischen Mischer weisen den weiteren Nachteil auf, dass die Mischelemente bei der Montage des Mischers von Hand jeweils um 90° verdreht und danach in das Mischrohr eingeschoben werden müssen. Die hat einen erheblichen Montagemehraufwand mit entsprechend hohen Herstellungskosten zur Folge.

Es ist Aufgabe der vorliegenden Erfindung einen statischen Mischer zu schaffen, welcher kostengünstig herstellbar ist, und welcher ein wesentlich verbessertes Mischresultat aufweist.

Diese Aufgabe wird gelöst mit einem statischen Mischer aufweisend die Merkmale von Anspruch 1. Die Unteransprüche 2 bis 11 betreffen weitere, vorteilhaft ausgestaltete Mischer. Die Aufgabe wird weiter gelöst mit einem Verfahren zum Herstellen von statischen Mischern aufweisend die Merkmale von Anspruch 12. Die Unteransprüche 13 bis 15 betreffen weitere, vorteilhafte Verfahrensschritte.

Der erfindungsgemässe statische Mischer weist den Vorteil auf, dass der Mischer sehr kostengünstig durch Spritzgiessen herstellbar ist, indem in einen ersten Verfahrensschritt eine Mehrzahl von vorzugsweise in einer Ebene angeordnete und gegenseitig über Faltstellen verbundene Mischelemente als Spritzgussteil erzeugt werden. Jedes dieser Mischelemente weist vorzugsweise eine Mischerstruktur auf, welche vorzugsweise mit einem einfachen sogenannten "Auf-Zu-Werkzeug" herstellbar ist, das heisst, dass der Spritzgiessvorgang mit Hilfe eines sich nur öffnenden und schliessenden Werkzeuges hergestellt werden kann, wobei das Werkzeug bevorzugt nur eine Linearbewegung ausführt . Die Faltstellen sind derart an den Mischelementen angeordnet, dass nach dem gegenseitigen Falten der Mischelemente, beziehungsweise nach dem gegenseitigen Verschwenken um jeweils 180 Grad, ein sich in einer Längsrichtung L erstreckender Mischer entsteht, welcher eine Mehrzahl von in Längsrichtung nacheinander beziehungsweise nebeneinander angeordneter Mischelemente aufweist.

In einer vorteilhaften Ausgestaltung weist jedes Mischelement auch eine Aussenwand auf, beispielsweise eine hohlzylinderförmig ausgestaltete Aussenwand, in deren Innerem die Mischerstruktur angeordnet und fest mit der Aussenwand verbunden ist. Die Aussenwände von benachbart angeordneten Mischelementen liegen vorzugsweise aneinander, und sind in einer besonders bevorzugten Ausführungsform gegenseitig fluiddicht verbunden. Ein derart ausgestaltetes Mischelement weist insbesondere den Vorteil auf, dass die Mischerstruktur fest mit der Aussenwand verbunden ist, und dass sich dadurch zwischen der Aussenwand und der Mischerstruktur kein mischresistenter Strömungsfaden ausbilden kann. Der erfindungsgemässe Mischer weist daher ein ausgezeichnetes Mischverhalten auf. Untersuchungen von statischen Mischern wie beispielsweise den im Dokument EP 1 125 626 offenbarten statischen Mischer haben ergeben, dass diese am Rand zwischen Mischer und Mischerwand einen Strömungsfaden aufweisen, welcher die gesamte Mischerstruktur durchläuft ohne dass ein Vermischen erfolgt. Dieser Effekt kann dadurch erklärt werden, dass dieser Mischer aus einem Kunststoffrohr besteht, in welches eine einstückige Mischeinheit lose eingeschoben ist. Der während dem Mischen anliegende Druck hat zur Folge, dass sich das Kunststoffrohr aufweitet, sodass zwischen dem Kunststoffrohr und der Mischeinheit ein sich in Längsrichtung erstreckender Spalt entsteht, entlang welchem ein Strömungsfaden fliessen kann ohne vermischt zu werden. Der erfindungsgemässe statische Mischer kann auf einfache Weise und zudem äusserst kostengünstig mit Mischerstrukturen versehen werden, welche fest mit der Aussenwand verbunden sind, sodass sich zwischen Mischer und Mischerwand keine sich über die gesamte Mischerstruktur erstreckende Strömungsfäden ausbilden können, weshalb der erfindungsgemässe statische Mischer ein wesentlich vorteilhafteres Mischverhalten aufweist, insbesondere wenn die zu mischenden Stoffe wegen hoher Viskosität unter höherem Druck zugeführt werden müssen, zwischen den zu mischenden Komponenten ein grosser Viskositätsunterschied besteht, oder zwischen den zu mischenden Komponenten ein stark von 1:1 abweichendes Volumenstromverhältnis vorliegt, beispielsweise ein Volumenstromverhältnis im Bereich zwischen 1:1 bis 1:1000.

Die aus dem Stand der Technik bekannten Mischelemente, welche zu einem Mischer zusammengebaut sind, weisen keine Mischerstruktur mit aussen umschliessender Rohrwandung auf. Insbesondere sind die Mischerstruktur und die Rohrwandung nicht fest miteinander verbunden. Dies hat auch zur Folge, dass die durch den Strömungswiderstand entstehenden Druckabfallkräfte über der Mischerstruktur beziehungsweise dem Mischgitter bis an das Ende der Mischelemente abgeleitet werden müssen, und erst am Ende der Mischelemente auf das Mischgehäuse abgeleitet werden. Diese auf die Mischelemente wirkenden Kräfte nehmen entlang der Mischstrecke vom Eintritt bis zum Austritt stetig zu. Daher sind die Stegdicken bekannter Mischelemente entsprechend gross zu wählen. Das wiederum hat eine Verringerung des freien Strömungsquerschnittes und somit eine Erhöhung des Strömungswiderstandes zur Folge, was den Druckabfall über dem Mischer erhöht beziehungsweise bei einem vorgegebenen Druckabfall den Mengendruchsatz durch den Mischer reduziert.

In einer Vorteilhaften Ausführungsform weist das Mischelement eine Mischerstruktur auf, welche mit der Rohrwandung fest verbunden ist. Vorzugsweise ist jedes Mischelement einstückig ausgestaltet und besteht dieses aus Kunststoff. Diese Ausgestaltung der Mischelemente wirkt sich auf die durch den Strömungsdruckabfall bewirkte mechanische Belastung der Mischerstruktur sehr günstig aus, weil bei derart ausgestalteten Mischelementen die an der Mischerstruktur auftretenden Druckverlustkräfte unmittelbar auf die umgebende Rohrwandung abgeleitet und entlang dieser Rohrwandung bis zum Mischerende geführt wird, wo dann die Kräfte auf das Mischergehäuse übertragen werden. Da jedes Mischelementes die Druckabfallkräfte sofort auf die Rohrwandung ableitet, muss die Mischerstruktur nur die eigenen Druckabfallkräfte aufnehmen und nicht auch noch die kumulierten Kräfte der in Fliessrichtung vorangehenden Mischelemente. Daher können die erfindungsgemässen Mischelemente mit dünneren Mischerstrukturen ausgestaltet sein, beispielsweise mit dünneren Stegen oder mit einer geringeren Dicke. Dies hat zur Folge, dass die erfindungsgemässen Mischelemente beziehungsweise der erfindungsgemässe Mischer ein grösseres Leervolumenanteil im Mischer und somit einen geringeren Strömungswiderstand aufweisen. Die hat zur Folge, dass beim erfindungsgemässen Mischer bei einem vorgegebenen Druckabfall eine grössere Flüssigkeitsmenge durchgesetzt werden kann.

Der Mischer kann jedoch auch ohne eine Aussenwand beziehungsweise ohne Rohrwand ausgestaltet werden, wobei dieser Mischer vorzugsweise in eine Hülse eingeführt wird, welche den Mischer seitlich umschliesst.

Der erfindungsgemässe statische Mischer weist auch den Vorteil auf, dass dieser sehr kostengünstig in einer Vielzahl von geometrischen Ausführungsformen ausgestaltet werden kann, und dass somit abhängig von der erforderlichen Mischleistung und/oder dem jeweiligen Typus der Mischaufgabe, beziehungsweise vom Viskositätsunterschied oder dem Volumenstromverhältnis eine entsprechende geometrische Ausgestaltung gewählt werden kann. So kann beispielsweise die Geometrie der Mischelemente, das heisst beispielsweise deren Durchmesser, Anzahl, Grösse, Ausrichtung und geometrischer Verlauf der Mischelemente, Wandstärke und weitere geometrische Eigenschaften gewählt werden. Beim Spritzgiessen können beispielsweise alle Mischelemente mit identischer Geometrie hergestellt werden, oder mit gruppenweise identischer Geometrie, oder auch derart, dass jedes Mischelement eine individuelle Geometrie aufweist. Daher kann der statische Mischer, umfassend die zusammengefalteten Mischelemente, in einer Vielzahl von Ausführungsformen ausgebildet werden.

Der erfindungsgemässe statische Mische weist somit den weiteren Vorteil auf, dass dieser, abhängig von dessen geometrischen Ausgestaltung, in einem breiten Anwendungsbereich bezüglich Viskositäts- und/oder Volumenstromverhältnis angewendet werden kann.

Die Erfindung wird nachfolgend an Hand von Figuren mit mehreren Ausführungsbeispielen erläutert, wobei dieselben Bezugszeichen dieselben Gegenstände bezeichnen.

Die Figuren zeigen:
- Fig. 1a: eine perspektivische Ansicht eines Mischelementes;
- Fig. 1b: eine Draufsicht auf ein Mischelement;
- Fig. 1c: ein Längsschnitt durch das Mischelement gemäss Figur 1a entlang der Schnittlinie A-A;
- Fig. 1d: ein Längsschnitt durch das Mischelement gemäss Figur 1a entlang der Schnittlinie B-B;
- Fig. 2a: ein Längsschnitt durch vier in Längsrichtung L nacheinander angeordnete Mischelemente entlang der Schnittlinie A-A;
- Fig. 2b: ein Längsschnitt durch vier in Längsrichtung L nacheinander angeordnete Mischelemente entlang der Schnittlinie B-B;
- Fig. 3a: acht Mischelemente nach dem Spritzgiessen;
- Fig. 3b: die acht Mischelemente währen dem Falten;
- Fig. 3c: die acht Mischelemente nach dem Falten;
- Fig. 4a: eine Draufsicht auf vierundzwanzig Mischelemente nach dem Spritzgiessen;
- Fig. 4b: eine Seitenansicht der in Figur 4a dargestellten Mischelemente;
- Fig. 5a: eine Teilansicht eines Längsschnittes von zwei in Längsrichtung benachbart angeordneten Mischelementen mit Faltstelle;
- Fig. 5b -5d: verschieden ausgestaltete Faltstellen;
- Fig. 6a-6c: eine Teilansicht eines Längsschnittes von zwei in Längsrichtung benachbart angeordneten, gegenseitig verbunden Mischelementen;
- Fig. 7: ein Längsschnitt eines statischen Mischers;
- Fig. 8: ein Längsschnitt eines weiteren Ausführungsbeispiels eines statischen Mischers;
- Fig. 8a: eine Detailansicht des statischen Mischers;
- Fig. 9a: eine Seitenansicht von acht noch nicht ganz zusammengefalteten Mischelementen;
- Fig. 9b: eine Ansicht der Figur 9a aus Blickrichtung D;
- Fig. 9c: eine Seitenansicht eines gefalteten Mischers, bestehend aus den in Figur 9a und 9b dargestellten Mischelementen;
- Fig. 9d: eine Frontansicht des in Figur 9c dargestellten Mischers;
- Fig. 10a-10c: Schnitte durch drei unterschiedlich ausgestaltete gefaltete Mischer;
- Fig. 11a: ein Mischelement;
- Fig. 11b: ein gefalteter Mischer umfassend Mischelemente gemäss Figur 11a;
- Fig. 12, 13: weitere Ausführungsbeispiele von Mischelementen;
- Fig. 14: vier Mischelemente nach dem Falten;
- Fig. 15a: acht Mischelemente nach dem Spritzgiessen;
- Fig. 15b, 15c: die acht Mischelemente währen dem Falten beziehungsweise Verschwenken;
- Fig. 15dc: die acht Mischelemente nach dem Falten;
- Fig. 16: eine Draufsicht auf ein weiteres Mischelement mit Dichtlippen;
- Fig. 17: einen Längsschnitt durch vier in Längsrichtung L nacheinander angeordnete Mischelemente.

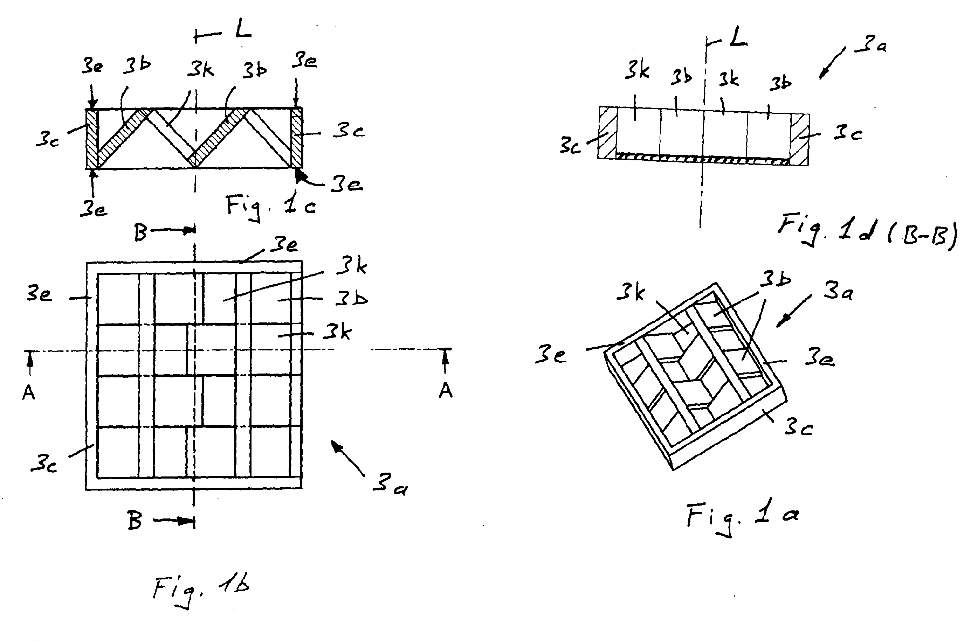

Figur 1a zeigt eine perspektivische Ansicht eines Mischelements 3a, welches eine Mischstruktur 3b mit schräg verlaufenden Leitelementen aufweist, welche von Durchlässen 3k durchbrochen sind. Das Mischelement 3a ist von einer Aussenwand 3c umgeben, welche Verbindungsstellen 3e aufweist. Figur 1b zeigt eine Draufsicht auf dasselbe Mischelement 3a.

Figur 1c zeigt einen Schnitt entlang der Schnittlinie A-A. Das Mischelement 3a umfasst eine Mehrzahl von quer zur Längsrichtung L verlaufenden Leitelementen, welche die Mischstruktur 3b ausbilden. Die Aussenwand 3c verläuft über die gesamte Höhe des Mischelementes 3a. Die Aussenwand umfasst oben und unten Verbindungsstellen 3e welche flächig ausgebildet sind. Im dargestellten Ausführungsbeispiel ist die Aussenwand 3c quadratisch verlaufend ausgestaltet, diese könnte jedoch auch andere Formen aufweisen, insbesondere einen kreisförmigen Verlauf.

Figur 1d zeigt dasselbe Mischelement 3a in einem Schnitt entlang der Schnittlinie B-B.

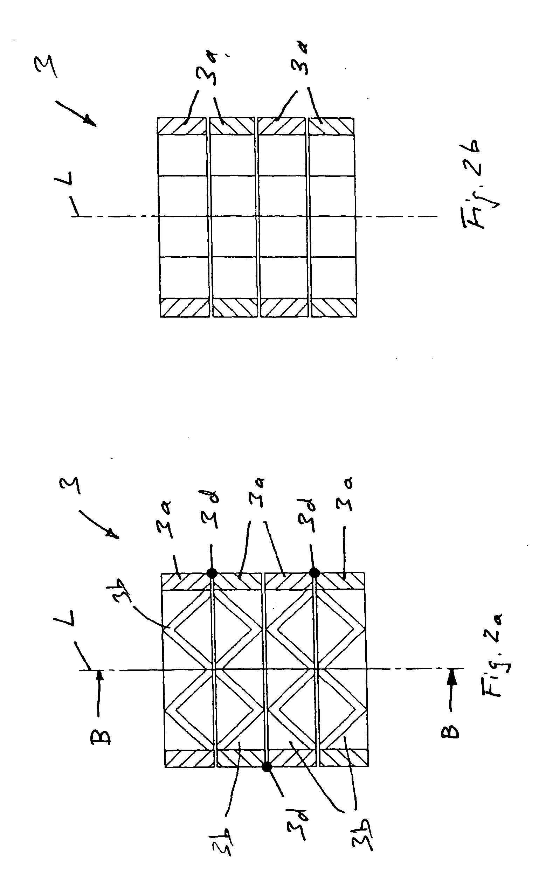

Figur 2a zeigt einen gefalteten Mischer 3 umfassend vier in Längsrichtung L nacheinander folgend beziehungsweise nebeneinander angeordnete Mischelemente 3a wobei die Mischelemente 3a jeweils über Faltstellen 3d gegenseitig verbunden sind, und wobei nebeneinander angeordnete Mischelemente 3a um gegenseitig um jeweils 180 Grad verwschenkt sind. Die Faltstellen 3d verlaufen senkrecht zur Längsrichtung L. Jedes Mischelement 3a weist wie schematisch angedeutet eine identische Mischerstruktur 3b auf, wobei die Mischerstruktur 3b auch auf unterschiedlichste Weise ausgestaltet sein kann, und daher nicht nur die dargestellte Ausführungsform aufweisen muss. Insbesondere können nebeneinander liegende Mischelemente 3a auch unterschiedliche Mischerstrukturen 3b aufweisen.

Figur 2b zeigt schematisch einen Schnitt entlang der Schnittlinie B-B des in Figur 2a dargestellten, gefalteten Mischers 3.

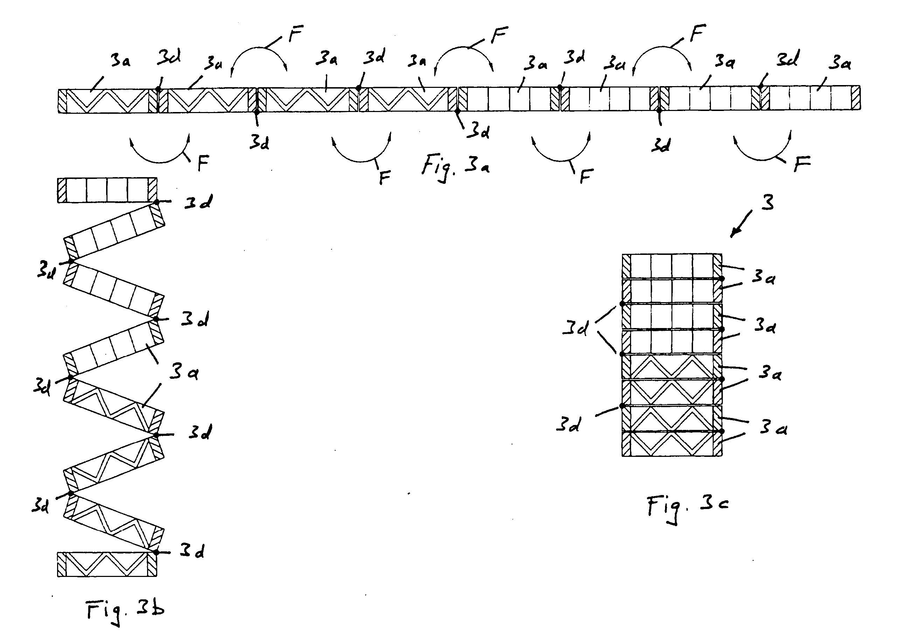

Figur 3a zeigt eine Struktur von acht in einer gemeinsamen Ebene liegend angeordneten Mischelementen 3a, wobei jeweils zwei benachbart beziehungsweise nebeneinander angeordnete Mischelemente 3a über eine Faltstelle 3d gegenseitig miteinander verbunden sind. Jedes Mischelement 3a umfasst eine nur schematisch dargestellte Mischerstruktur 3b sowie eine Aussenwand 3c. Die in Figur 3a dargestellte Anordnung wird vorzugsweise durch Spritzgiessen unter Verwendung eines Thermoplasten hergestellt, wobei die Mischerstruktur 3b vorzugsweise derart gewählt wird, dass die Anordnung mit einem einfachen "Auf-Zu-Werkzeug" herstellbar ist, vorzugsweise derart, dass das Werkzeug nur linear bewegt werden muss. Im dargestellten Ausführungsbeispiel weisen alle Mischelemente 3a dieselbe geometrische Ausgestaltung auf, wobei die vier links dargestellten sowie die vier rechts dargestellten Mischelemente 3a bezüglich der Längsrichtung L jeweils um einen bestimmten Winkel im Bereich von 45 bis 90 Grad gedreht angeordnet werden, vorzugsweise, wie im Beispiel dargestellt, um jeweils 90 Grad. Zur Herstellung der in Figur 3a dargestellten Anordnung von Mischelementen 3a kann nebst einem Thermoplasten auch ein anderes Material, insbesondere ein anderer Kunststoff oder auch ein Metall verwendet werden.
In einem zweiten Verfahrensschritt werden die benachbart angeordneten Mischelemente 3a um die Faltstelle 3d gefaltet, wie dies in Figur 3b dargestellt ist, sodass nacheinander angeordnete Mischelemente 3a gegenseitig um jeweils 180 Grad verschwenkt sind. Durch ein gegenseitiges Umklappen benachbarter Mischelemente 3b um einen Winkel von jeweils 180° entsteht der in Figur 3c dargestellte gefaltete Mischer 3, umfassend acht in Längsrichtung L nacheinander folgend angeordnete Mischelemente 3a. Die Mischerstruktur 3b jedes einzelnen Mischelementes 3a, kann identisch, gruppenweise identisch, oder auch individuell ausgestaltet sein. Im dargestellten Ausführungsbeispiel sind alle acht Mischelemente 3a geometrisch identisch ausgestaltet, das heisst mit derselben Mischerstruktur 3b, jedoch teilweise spiegelbildlich und/oder um die Längsachse um beispielsweise um 45 bis 90 Grad, vorzugsweise 90 Grad, verdreht angeordnet. Dadurch, dass die einzelnen Mischelemente 3a sowie auch deren geometrische Mischerstruktur 3b sehr einfach und kostengünstig herstellbar und auch variierbar ist, können Mischelemente 3 mit unterschiedlichsten Mischerstrukturen 3b, und unterschiedlichst ausgestalteten Mischelementen 3a, und auch in unterschiedlichster Anzahl einfach und kostengünstig hergestellt werden. Beim Zusammenstellen des statischen Mischers 1 kann vorzugsweise aus einer grossen Vielzahl möglicher geometrischer Ausgestaltungen von Mischerelementen 3a die jeweils bevorzugte ausgewählt werden, und die Mischelemente 3a durch Falten in Längsrichtung L nacheinander folgend angeordnet werden, wodurch der Mischer 3 gebildet wird.

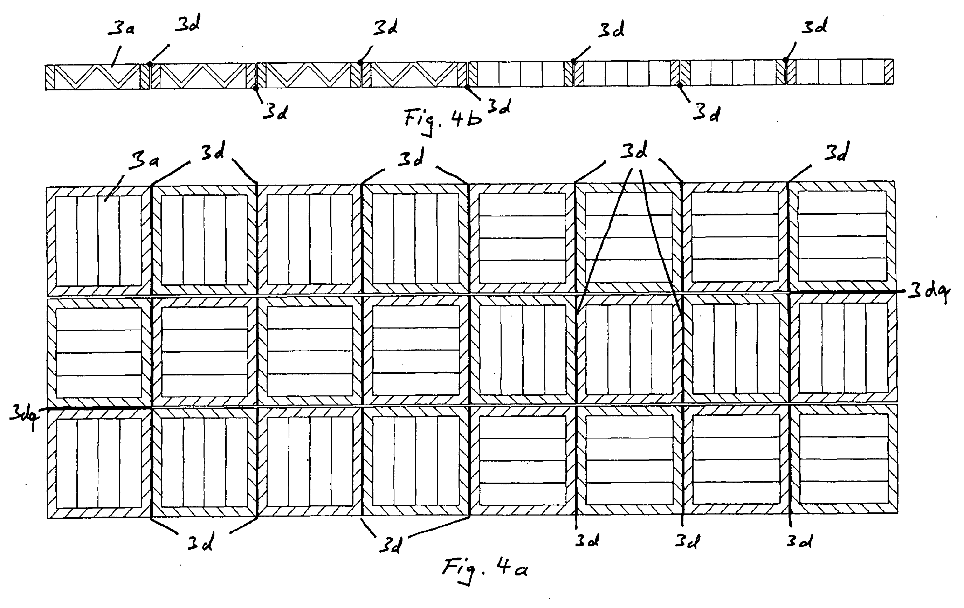

Figur 4a zeigt eine Struktur bestehend aus drei Reihen von je acht Mischelemente 3a, welche alle über Faltstellen 3d gegenseitig verbunden sind. In vertikaler Richtung sind zwei Querfaltstellen 3dq vorgesehen, sodass alle dargestellten Mischelemente 3a über Faltstellen 3d, 3dq miteinander verbunden sind. Aus dieser Anordnung ist ein gefalteter Mischer 3 umfassend vierundzwanzig in Längsrichtung L hintereinander angeordneter Mischelemente 3a herstellbar.

Figur 4b zeigt eine Seitenansicht der Struktur gemäss Figur 4a. Die Anordnung gemäss Figur 4a und 4b kann auf einfache Weise durch Spritzgiessen hergestellt werden.

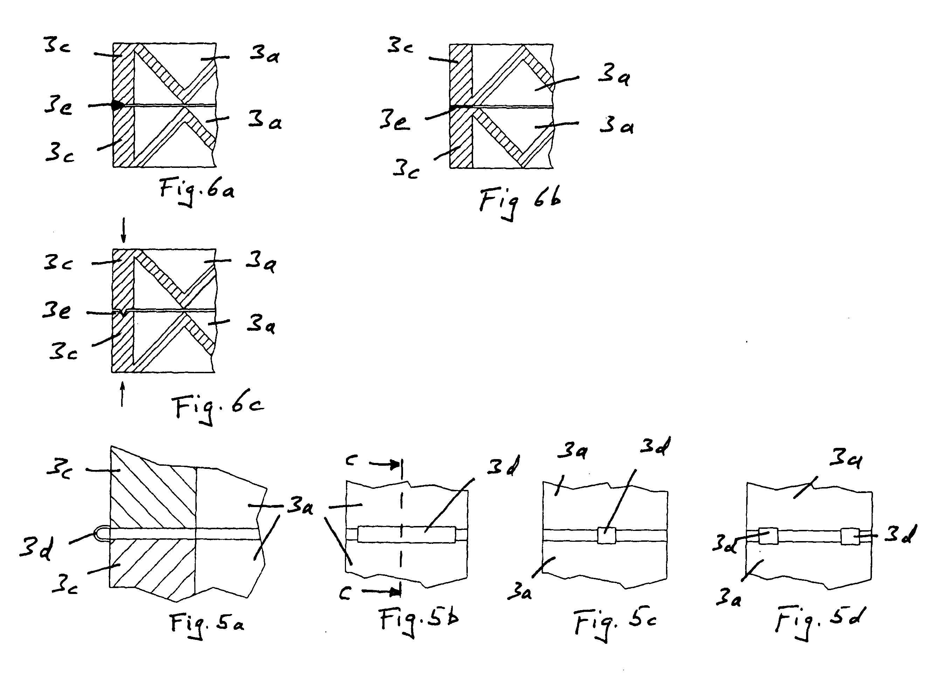

Figur 5a zeigt in einem Längsschnitt entlang der Schnittlinie C-C zwei übereinander beziehungsweise in Längsrichtung L nebeneinander oder nacheinander angeordnete Mischelemente 3a, welche über die Faltstelle 3d miteinander verbunden sind. Die Faltstelle 3d kann auf unterschiedlichste Weise ausgestaltet sein, beispielsweise, wie in Figur 5b dargestellt, als längliche, senkrecht zur Längsrichtung L verlaufende Faltstelle 3d, oder wie in Figur 5c dargestellt als schmale Faltstelle 3d, oder, wie in Figur 5d dargestellt, als zwei oder auch mehrere Faltstellen 3d.

Es kann sich als vorteilhaft erweisen in Längsrichtung L nebeneinander liegend angeordnete Mischelemente 3a mit zusätzlichen Mitteln oder Massnahmen gegenseitig zu verbinden. Figur 6a zeigt einen Längsschnitt durch zwei in Längsrichtung L nebeneinander liegend angeordnete Mischelemente 3a, welche an deren Aussenwand 3c eine Verbindungsstelle 3e aufweisen, welche im dargestellten Ausführungsbeispiel als Verschweissung ausgebildet ist. Vorteilhafterweise werden zwei benachbart angeordnete Mischelemente 3a in der gesamten Umfangsrichtung verschweisst, sodass sich zwischen den zwei Mischelementen 3a eine fluiddichte Verbindung ergibt.

Figur 6b zeigt zwei nebeneinander liegend angeordnete Mischelemente 3a welche an der Verbindungsstelle 3e gegenseitig verklebt sind.

Figur 6c zeigt wiederum zwei in Längsrichtung L nebeneinander liegend angeordnete Mischelemente 3a, deren Aussenwand 3c eine als Schnappverbindung ausgestaltete Verbindungsstelle 3e aufweisen.

Wie in Figur 6a dargestellt können die in Längsrichtung L nebeneinander angeordneten Mischelemente 3a derart gegenseitig verbunden sein, dass die Aussenwand 3c zusammen mit den fluiddichten Verbindungsstellen 3e eine gemeinsame, fluiddichte Aussenwand ausbilden. Zudem oder an Stelle der fluiddichten Verbindungsstelle 3e könnten die Mischelemente 3a mit einer gemeinsamen, fluiddichten Aussenhülle, zum Beispiel einer dünnen Folie oder einem Schrumpfschlauch, umgeben sein, sodass der gefalteter Mischer 3 in Längsrichtung L eine fluiddichte Aussenhülle aufweist.

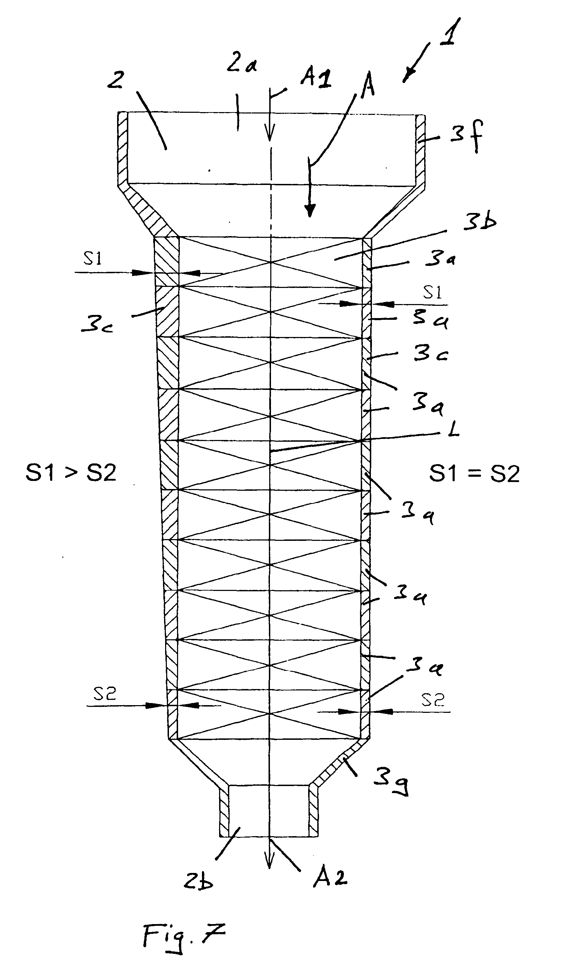

Figur 7 zeigt einen derart ausgestalteten gefalteten Mischer 3, wobei in der rechts dargestellten Ausführungsform alle in Längsrichtung L nebeneinander angeordneten Mischelemente 3 eine Aussenwand 3c mit derselben Wandstärke aufweisen. Die Faltstellen 3d sind in Figur 7 nicht dargestellt. Die Faltstellen 3d können auch, insbesondere wenn diese über die Aussenwand 3c vorstehen, entfernt oder abgetragen werden, nachdem die nebeneinander angeordneten Mischelemente 3, wie beispielsweise in den Figuren 6a bis 6c dargestellt, gegenseitig verbunden sind. In Figur 7 ist mit den Mischelementen 3a oben ein Einlasssegment 3f verbunden, und unten ist mit den Mischelementen 3a ein Auslasssegment 3g verbunden. Diese beiden Segmente 3f, 3g können auch über Faltstellen 3d mit den benachbart angeordneten Mischelementen 3a verbunden sein, sodass sowohl die Mischelemente 3a als auch die Segmente 3f,3g während dem Spritzgiessverfahren gemeinsam herstellbar sind. Die einströmenden Stoffe treten beim Eintritt A1 ein, durchströmen den gefalteten Mischer 3 in Strömungsrichtung A und treten in Austrittsrichtung A2 aus dem gefalteten Mische 3 aus. Im dargestellten statischen Mischer 1 sind die Mischerstrukturen 3b jedes Mischelementes 3a vorzugsweise mit der Aussenwand 3c verbunden, sodass ausgeschlossen ist, dass sich zwischen Mischstruktur 3b und Aussenwand 3c ein sich in Längsrichtung erstreckender Strömungsfaden ausbilden kann. Dieser statische Mischer 1 weist somit ein ausgezeichnetes Mischverhalten auf.

Figur 7 zeigt auf der linken Seite ein weiteres Ausführungsbeispiel eines statischen Mischers 1 mit gefaltetem Mischer 3, welcher, im Unterschied zu der rechts dargestellten Ausführungsform, eine Aussenwand 3c aufweist, deren Dicke S1, S2 in Verlaufsrichtung der Längsrichtung L abnimmt. Da der Druck und damit die auf die Aussenwand wirkenden Kräfte in Verlaufsrichtung der Längsachse L wegen dem Strömungsdruckverlust abnimmt, kann es sich als vorteilhaft erweisen, die Wandstärke S1 im Bereich des Einlasssegmenten 3f grösser bzw. dicker auszugestalten als im Bereich des Auslasssegmentes 3g. Derselbe Verstärkungseffekt der Aussenwand kann auch durch geeignete Massnahmen, z.B. mittels Längs- oder Umfangsrippen auf der Aussenseite, erzielt werden. Um den in Figur 7 links dargestellten statischen Mischer 1 zu erzeugen ist es erforderlich, dass die einzelnen Mischelemente 3a eine jeweils gegenseitig abgestimmte, jedoch unterschiedliche Dicke der Aussenwand 3c aufweisen. Beispielsweise müsste in der in Figur 3a dargestellten Anordnung jedes Mischelement 3a eine unterschiedliche und zudem leicht konisch verlaufende Wandstärke der Aussenwand 3c aufweisen. Zudem könnte links und rechts der in Figur 3a dargestellten Anordnung zudem noch das Einlasssegment 3f beziehungsweise das Auslasssegment 3g über Faltstellen 3d mit dem jeweils benachbarten Mischelement 3a verbunden sein. Auch eine derartige Anordnung ist relativ einfachen durch Spritzgiessen herstellbar.

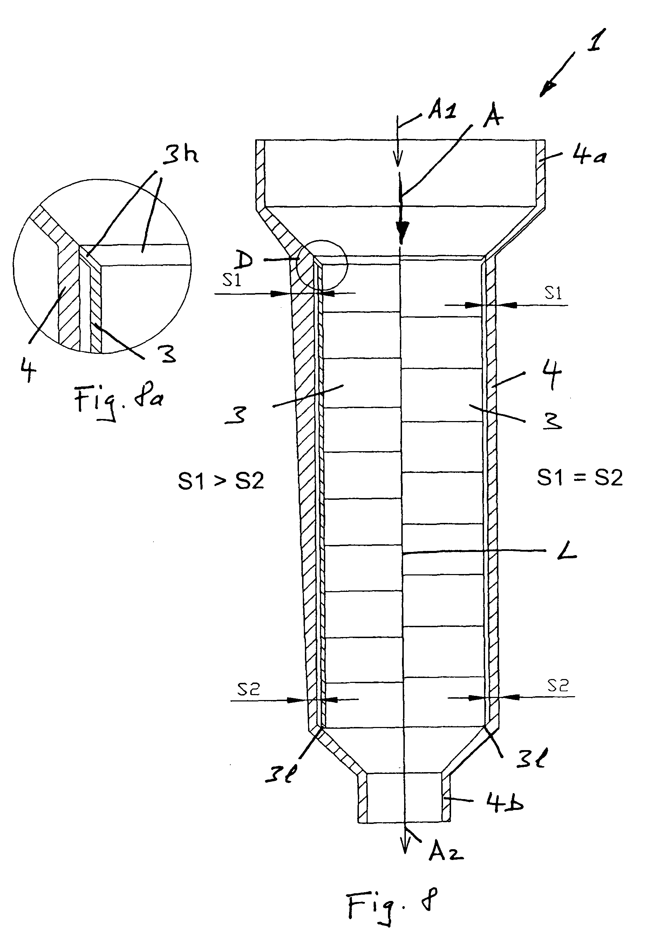

Figur 8 zeigt eine weiteres Ausführungsbeispiel eines statischen Mischers 1, welcher eine Aussenhülse 4 beziehungsweise ein Aussenrohr 4 mit Eintrittsbereich 4a und Austrittsbereich 4b aufweist, wobei in dieser Aussenhülse 4 ein gefalteter Mischer 3 angeordnet ist. Der gefaltete Mischer 3 weist, wie in Figur 8a im Detail dargestellt, im Bereich des Eintrittbereiches 4a vorzugsweise eine Dichtlippe 3h auf, welche an der Aussenhülse 4 anliegt. Die Aussenhülse 4 umfasst im Bereich des Austrittbereiches 4b eine Abstützstelle 31, an welcher sich der gefaltete Mischer 3 aufstützt. Die Aussenhülse 4 kann, wie in Figur 8 rechts dargestellt, über die gesamte Länge L dieselbe Wandstärke aufweisen, oder, wie in Figur 8 links dargestellt, eine in Längsrichtung L abnehmende Wandstärke oder verstärkende Längs- und Umfangsrippen aufweisen.

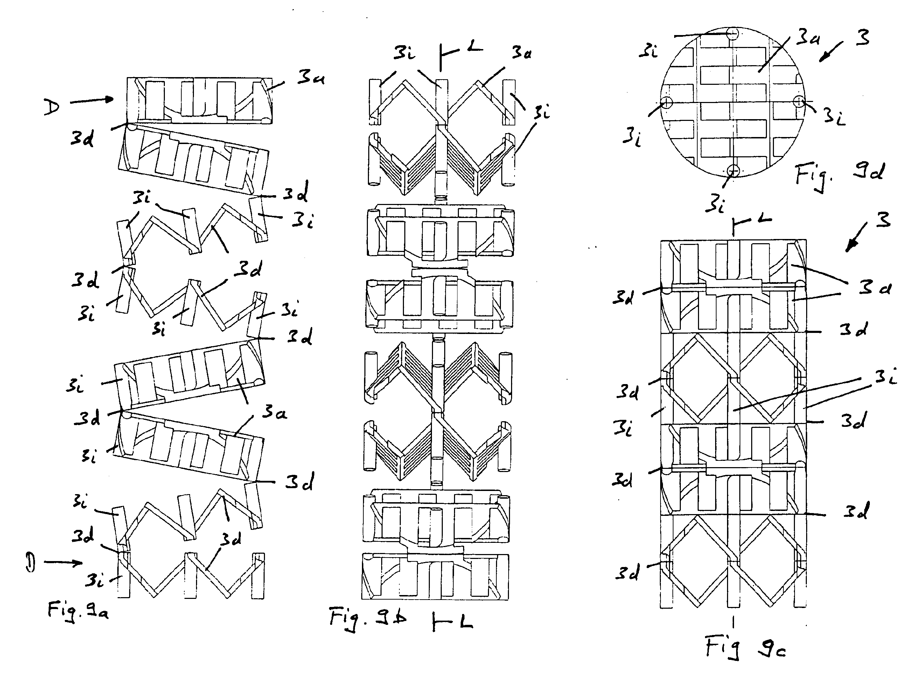

Figur 9a zeigt eine Seitenansicht von acht über Faltstellen 3d verbundene, noch nicht vollständig zu einem gefalteten Mischer 3 zusammengefaltete Mischelemente 3a. Jedes Mischelement 3a weist an dessen Peripherie vier Längsstützen 3i auf. Die Mischstruktur 3b der Mischelemente 3a kann auf unterschiedlichste Weise ausgestaltet sein. Figur 9b zeigt eine Seitenansicht aus Richtung D der Anordnung gemäss Figur 9a. Figur 9c zeigt den vollständig gefalteten Mischer 3, wobei die Längsstützen 3i derart angeordnet sind, dass sich diese gegenseitig stützen, was dem gesamten Mischer 3 in Längsrichtung Halt verleiht. Die Längsstützen 3i können auch Schnappelemente aufweisen, sodass aneinander liegende Längsstützen 3i gegenseitig gehalten sind. Aneinander liegende Längsstützen 3i könnten auch gegenseitig fest miteinander verbunden sind, zum Beispiel durch Kleben. Dieser gefaltete Mischer 3 weist keine Aussenwand 3c auf, sodass die Längsstützen 3i in Längsrichtung L eine Haltefunktion übernehmen. Jedes Mischelement 3a sollte zumindest zwei Längsstützen 3i aufweisen, kann jedoch beispielsweise auch drei, vier, fünf oder noch mehr Längsstützen 3i aufweisen. Figur 9d zeigt eine Ansicht der Stirnseite des in Figur 9c dargestellten gefalteten Mischers 3. Mindestens zwei Längsstützen 3i sind an der Kreisperipherie angeordnet und verlaufen in Längsrichtung L über die gesamte Länge des Mischers 3. Gewisse oder alle Mischelemente 3a können natürlich zusätzlich auch noch mit einer Aussenwand 3c oder mit Teilwänden versehen sein.

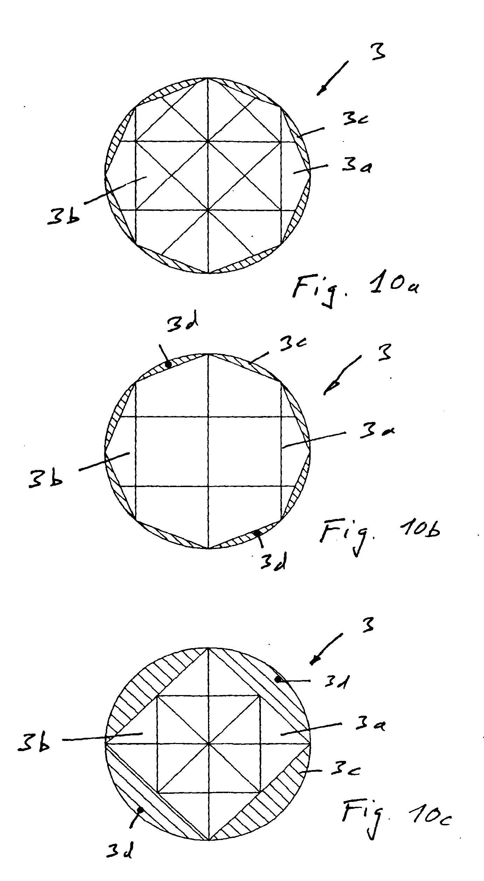

Die Figuren 10a bis 10c zeigen Querschnitte durch Mischelemente 3a von unterschiedlichen Ausführungsformen gefalteter Mischer 3. Die Mischelemente 3a können in einer Vielzahl von geometrischen Ausführungsformen ausgestaltet sein, und sich beispielsweise betreffend Innendurchmesser oder Anzahl, Grösse, Ausrichtung, Anordnung und geometrischer Verlauf der Mischerstruktur 3b unterscheiden. Der Innenquerschnitt der Mischerstruktur 3b kann auch unterschiedlichste Formen aufweisen, beispielsweise, wie in Figur 10a und 10b dargestellt, eine achteckige Form, oder, wie in Figur 10c dargestellt, eine viereckige Form. Alle drei dargestellten Mischelemente 3a weisen eine umhüllende Aussenwand 3c auf. Diese Aussenwand 3c kann wie dargestellt derart ausgestaltet sein, dass die Aussenseite des Mischelementes 3a kreisförmig verläuft. Die Aussenseite könnte jedoch auch eine andere Form aufweisen, beispielsweise oval oder eckig, beispielsweise vier-, sechs- oder achteckig. Die dargestellten Mischelemente 3a könnten, falls erforderlich und wie in Figur 7 und 8 dargestellt, innerhalb einer Hülse 4 angeordnet sein. Die Faltstellen 3d sind in den Figuren 10b und 10c nur schematisch dargestellt. Ein statischer Mischer 1, umfassend einen in einer Hülse 4 angeordneten gefalteten Mischer 3 könnte auch derart ausgestaltet sein, dass der gefaltete Mischer beziehungsweise dessen Mischelemente 3a eine eckige Aussenkontur aufweist, beispielsweise wie in Figur 10b eine achteckige Aussenkontur, und dass die Hülse 4 einen kreisförmigen Innenquerschnitt aufweist, sodass die Faltstellen 3d, wie aus Figur 10b ersichtlich, im Zwischenraum zwischen der achteckigen Aussenkontur des Mischelementes 3a und der Innenwand der kreisförmigen Hülse 4 zu liegen kommen. Die Innenwand der Hülse 4 könnte auch in Längsrichtung verlaufende Nuten aufweisen, in welchen die über die Aussenkontur der Mischelemente 3a vorstehenden Faltstellen 3d Platz finden.

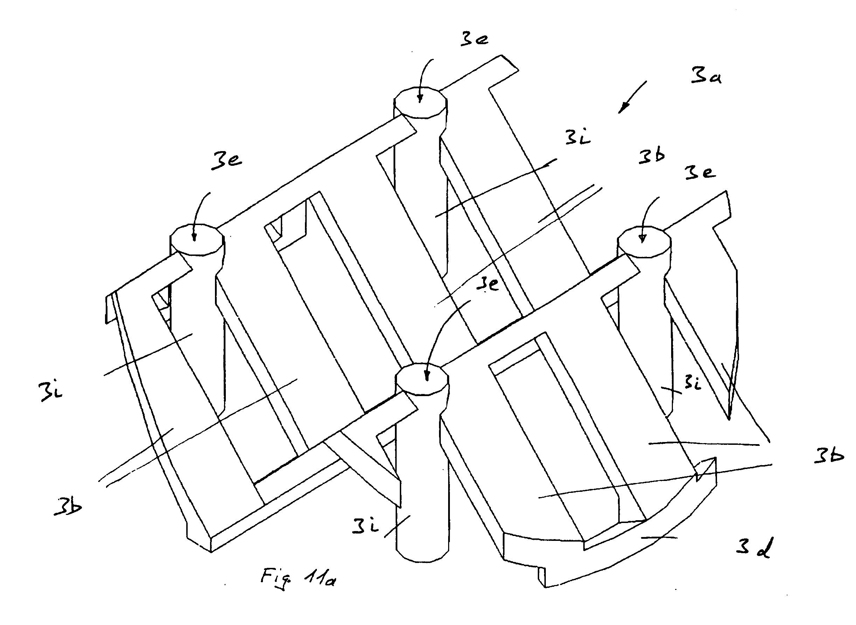

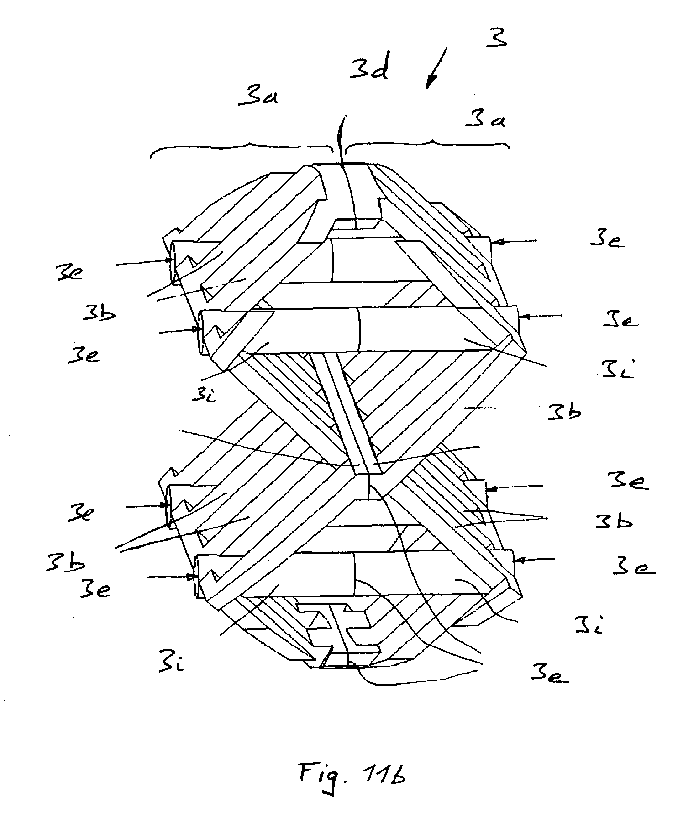

Figur 11 a zeig ein weiteres Ausführungsbeispiel eines Mischelementes 3a mit Mischerstruktur 3b, Längsstützen 3i, Verbindungsstellen 3e und Faltstelle 3d. Figur 11b zeigt eine perspektivische Seitenansicht von zwei wie in Figur 11a dargestellten Mischelementen 3a, welche ursprünglich, wie in Figur 3a dargestellten nebeneinander angeordnet durch Spritzgiessen hergestellt wurden, und danach um die Faltstelle 3d gefaltet wurden, sodass sich die in Figur 11b dargestellte Anordnung ergibt. Dieser gefaltete Mischer 3 ist insbesondere für eine wie in Figur 8 dargestellte Anordnung mit einer Aussenhülse 4 geeignet, indem der in Figur 11b dargestellte Mische 3 in die Aussenhülse 4 eingeführt wird. Falls es erforderlich ist, dass mehr als zwei Mischelemente 3a in Längsrichtung L hintereinander angeordnet sind, besteht die Möglichkeit eine Mehrzahl der in Figur 11b dargestellten gefalteten Mischer 3 nacheinander in die Hülse 4 einzuführen, wobei darauf zu achten ist, dass die Längsstützen 3i bzw. deren Verbindungsstellen 3e in Längsrichtung L sich gegenseitig berührend aufeinander zu liegen kommen.

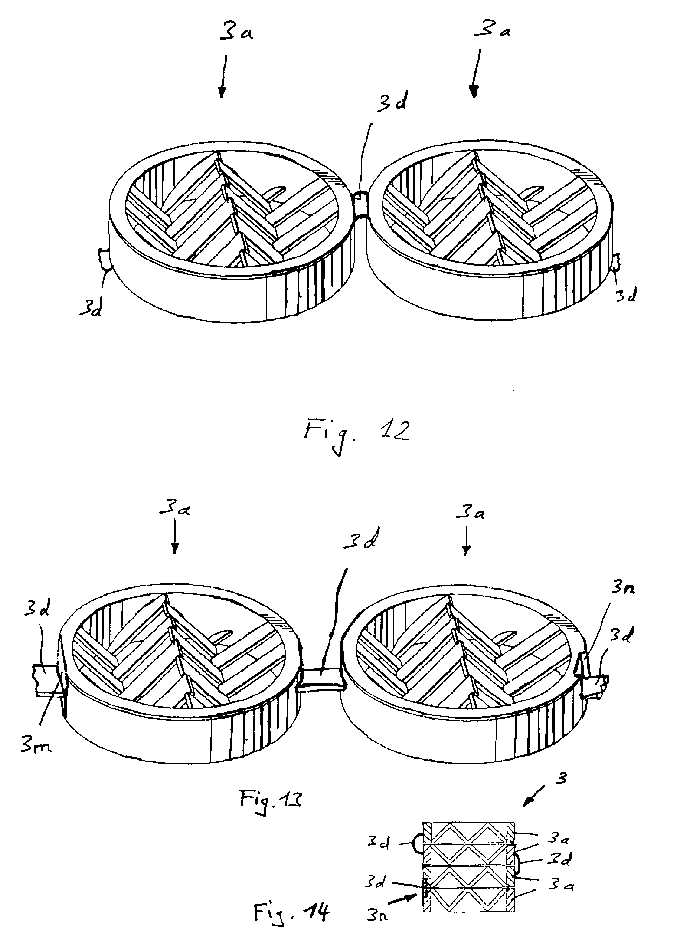

Die Figuren 12 und 13 zeigen weitere Ausführungsbeispiele von über Faltstellen 3d beziehungsweise Verbindungsglieder 3d miteinander verbundenen Mischelementen 3a, welche durch Falten um die Faltstellen 3d zu einem gefalteten Mischer 3 zusammenstellbar sind. Die Faltstelle 3d kann, wie in Figur 12 dargestellt, im Bereich der Stirnfläche oder an der Aussenwand im Bereich der Stirnfläche mit dem Mischelement 3a verbunden sein. Die Faltstelle 3d kann auch, wie in Figur 13 dargestellt, irgendwo an der Aussenwand des Mischelementes 3a mit dem Mischelement 3a verbunden sein. Im Ausführungsbeispiel gemäss Figur 13 muss die Faltstelle 3d natürlich zumindest derart lang ausgestaltet sein, dass zwei benachbarte Mischelemente 3a derart gegenseitig gefaltet werden können, dass deren Stirnflächen nach erfolgtem Falten, wie in Figur 14 dargestellt, aneinander liegen. Die Faltstelle 3d kann, wie in Figur 14 rechts dargestellt, relativ kurz ausgestaltet sein, sodass die Faltstelle 3d im Wesentlichen entlang der Aussenwand verläuft. Die Aussenwand des Mischelementes 3a kann auch, wie in Figur 13 links dargestellt, eine Abflachung 3m, oder wie in Figur 13 rechts dargestellt, eine Ausnehmung 3n aufweisen. Die Abflachung 3m beziehungsweise die Ausnehmung 3n und die Dicke der Faltstelle 3d sind vorteilhafterweise derart ausgestaltet, dass die Faltstelle 3d bei gefaltetem Mischer 3 entlang der Abflachung 3m beziehungsweise innerhalb der Ausnehmung 3n verläuft, und dabei vorzugsweise nicht über die im wesentlichen kreisförmig verlaufende Aussenwand vorsteht. Figur 14 zeigt unten links ein Ausführungsbeispiel, bei welchem die Faltstelle 3d vollständig innerhalb der Ausnehmung 3n verläuft, und daher in radialer Richtung nicht über den Aussenquerschnitt des Mischers 3 vorsteht. Die Länge der Faltstelle 3d beziehungsweise des Verbindungsgliedes 3d ist bevorzugt wie in Figur 14 links unten derart gewählt, dass benachbarte Mischelemente 3a an deren Stirnseiten gegenseitig anliegen, und das Verbindungsglied 3d innerhalb der Nut 3n verläuft, vorzugsweise derart, dass das Verbindungsglied 3d nicht über den Aussenquerschnitt des Mischers 3 vorsteht. Die Faltstelle 3d kann jedoch auch, wie in Figur 14 links dargestellt, länger ausgestaltet sein, sodass diese in gewissem Masse über die Aussenwand vorsteht. Bei der in Figur 13 dargestellten Ausführungsform ist die Faltstelle 3d in senkrechter Richtung vorzugsweise sehr dünn ausgestaltet, mit vorzugsweise weniger als 1 mm Dicke, damit das Falten wenig Kraft erfordert. Vorzugsweise ist die Faltstelle 3d auf halber Höhe eines Mischelementes 3a angeordnet. Der in Figur 14 in einem Längsschnitt dargestellte Mischer 3 umfasst vier Mischelemente 3a, welche über seitlich an der Aussenfläche angeordnete Faltstellen 3d gegenseitig gefaltet wurden. Ein Vorteil dieser Anordnung ist darin zu sehen, dass die Stirnflächen von aneinander anliegenden Mischelementen 3a vollflächig aufeinander liegen können, ohne durch die Faltstellen 3d behindert zu werden.

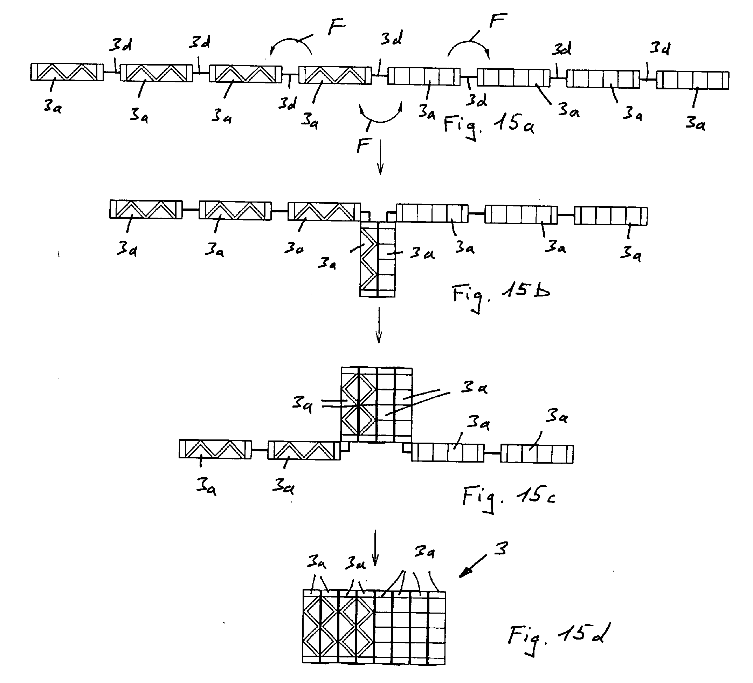

Die Figuren 15a bis 15d zeigen ein weiteres Ausführungsbeispiel der Herstellung eines gefalteten Mischers 3 bestehend aus acht über Faltstellen 3d miteinander verbundenen Mischelementen 3a. Figur 15a zeigt die Anordnung der Mischelemente 3a nach dem Spritzgiessen. In einem ersten Verfahrensschritt werden die Mischelemente 3a wie in Figur 15a dargestellt, in Faltrichtung F gefaltet, sodass die in Figur 15b dargestellte Anordnung entsteht. Danach werden die Mischelemente 3a, wie in Figur 15c und 15d dargestellt, weiter an den Faltstellen 3d gefaltet, bis der in Figur 15d dargestellte gefaltete Mischer 3 entsteht.

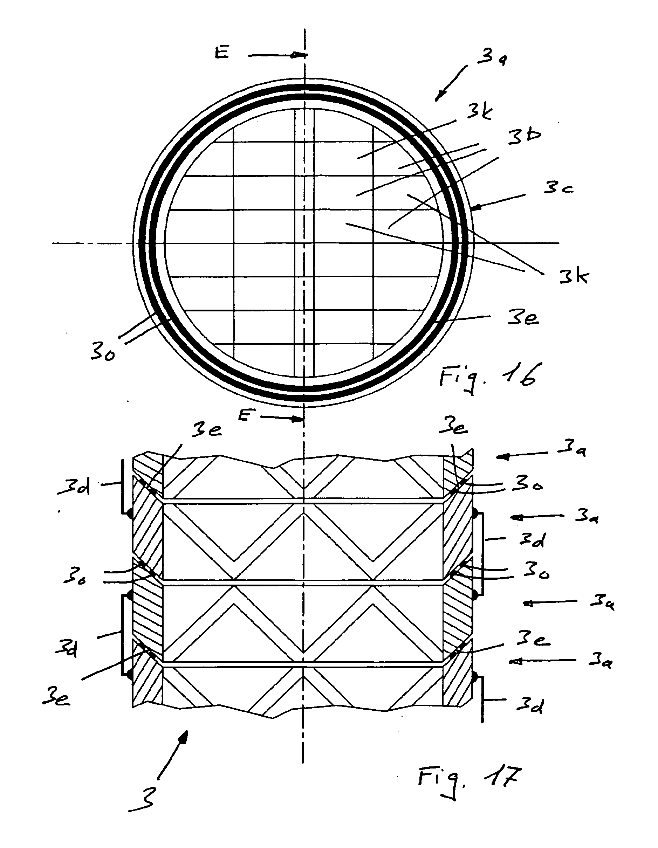

Figur 16 zeigt eine Draufsicht auf ein weiteres Ausführungsbeispiel eines Mischelementes 3a, mit Aussenwand 3c, Mischerstruktur 3b und Durchlässen 3k, wobei nur einige der Mischerstrukturen 3b und Durchlässe 3k mit Bezugszeichen versehen sind. Das dargestellte Mischelement 3a weist an dessen Verbindungsstelle 3e vorstehende Dichtlippen 3o auf, im dargestellten Ausführungsbeispiel zwei konzentrisch und ringförmig verlaufende Dichtlippen 3o.

Figur 17 zeigt einen Längsschnitt von vier in Längsrichtung L nacheinander angeordneten Mischelementen 3a, wie diese in Figur 16 dargestellt sind. Der Schnitt verläuft entlang der Schnittlinie E-E, wobei die Faltstellen 3d in Figur 16 nicht dargestellt sind. Die Verbindungsstellen 3e könnten ein senkrecht zur Längsrichtung L verlaufe Stirnfläche aufweisen, weisen vorzugsweise jedoch, wie in Figur 17 dargestellt, einen gegenüber der Längsrichtung L geneigten Verlauf auf. Besonders vorteilhaft weist die Verbindungsstelle 3e, wiee in Figur 17 dargestellt, einen konischen Verlauf auf, und vorzugsweise zudem mit zumindest einer umlaufenden Dichtlippe 3o. Im dargestellten Ausführungsbeispiel umfasst jede Verbindungsstelle 3e zwischen zwei Mischelementsegmenten 3a zwei konzentrisch verlaufende, ringförmige Dichtlippen 3o. Die konisch ausgestaltete Verbindungsstelle 3e weist den Vorteil auf, dass sich zwei benachbart angeordnete Mischelementsegmente 3a während dem gegenseitigen Anordnen selbst zentrieren. Die konisch ausgestaltete Verbindungsstelle 3e weist zudem den Vorteil auf, dass diese eine erhöhte Dichtwirkung aufweist. Eine besonders hohe Dichtwirkung wird durch die Verwendung von Dichtlippen 3o erzielt. Besonders vorteilhaft ist somit die in Figur 17 dargestellte Ausgestaltung von konischen Verbindungsstellen 3e mit Dichtlippen 3o. Dies bewirkt eine ausgezeichnete Dichtwirkung zwischen zwei aneinander liegenden Mischelementsegmenten 3a, und ist insbesondere dann vorteilhaft, wenn die durch den Mischer 3 zu mischenden Substanzen einen grossen Viskositätsunterschied aufweisen, das heisst wenn die eine Substanz eher niederviskose Anteile und die andere Substanz eher hochviskose Anteile aufweist. Die in Figur 17 dargestellte Anordnung weist für derartige Substanzen den Vorteil auf, dass ein seitliches, durch die Verbindungsstelle 3e verlaufendes Wegfliessen der Substanz verhindert wird.
Die Dichtlippen 3o können natürlich auf unterschiedlichste Weise auf der Verbindungsstelle 3e verlaufend angeordnet sein, um eine Dichtwirkung zwischen zwei benachbart angeordneten Mischelementsegmenten 3a zu erzielen.

## Patentansprüche

1. Statischer Mischer (1) umfassend einen Mischer (3) mit einer Mehrzahl von in Richtung einer Längsachse L nacheinander angeordneten Mischelementen (3a), wobei nacheinander angeordnete Mischelemente (3a) gegenseitig um jeweils 180 Grad verschwenkt sind, **dadurch gekennzeichnet, dass** die Mischelemente (3a) über eine Faltstelle (3d) gegenseitig verbunden und gegenseitig gefaltet sind.

2. Statischer Mischer nach Anspruch 1, **dadurch gekennzeichnet, dass** die Mischelemente (3a) eine Mischerstruktur (3b) sowie eine Aussenwand (3c) aufweisen, und dass die Mischelemente (3a) zumindest über die Aussenwand (3c) gegenseitig verbunden sind.

3. Statischer Mischer nach einem der vorhergehenden Ansprüche, **dadurch gekennzeichnet, dass** die Mischelemente (3a) eine Mischerstruktur (3b) sowie eine Aussenwand (3c) aufweisen, und dass die Mischerstruktur (3b) mit der Aussenwand (3c) verbunden ist.

4. Statischer Mischer nach Anspruch 2 oder 3, **dadurch gekennzeichnet, dass** die Aussenwand (3c) Verbindungsflächen mit Verbindungsstellen (3e) aufweist, wobei benachbart angeordnete Mischelemente (3a) über die Verbindungsstellen (3e) gegenseitig verbunden sind.

5. Statischer Mischer nach Anspruch 4, **dadurch gekennzeichnet, dass** die Verbindungsstellen (3e) konisch verlaufend ausgestaltet sind.

6. Statischer Mischer nach einem der Ansprüche 4 oder 5, **dadurch gekennzeichnet, dass** an den Verbindungsstellen (3e) Dichtlippen (3o) angeordnet sind.

7. Statischer Mischer nach einem der Ansprüche 2 bis 6, **dadurch gekennzeichnet, dass** die Aussenwände (3c) von benachbart angeordneten Mischelementen (3a) gegenseitig fluiddicht verbunden sind.

8. Statischer Mischer nach einem der Ansprüche 2 bis 7, **dadurch gekennzeichnet, dass** zumindest einige der Mischelemente (3a) eine unterschiedliche geometrische Ausgestaltung aufweisen, wobei insbesondere zumindest einige der Mischelemente (3a) Aussenwände (3c) mit unterschiedlicher Wandstärke und/oder Aussenwände (3c) mit Verstärkungsrippen aufweisen.

9. Statischer Mischer nach einem der vorhergehenden Ansprüche, **dadurch gekennzeichnet, dass** die Mischelemente (3a) Längsstützen (3i) aufweisen, welche derart angeordnet sind, dass die Längsstützen (3i) eine in Längsrichtung (L) wirkende Kraft von einem Mischelement (3a) auf das nachfolgend angeordnete Mischelement (3a) übertragen.

10. Statischer Mischer umfassend eine Aussenhülse (4) sowie einen darin angeordneten Mischer (3) nach einem der vorhergehenden Ansprüche.

11. Statischer Mischer nach Anspruch 10, **dadurch gekennzeichnet, dass** die Aussenhülse (4) in Verlaufsrichtung der Längsachse (L) eine abnehmende oder zunehmende Wandstärke und/oder an der Aussenseite angeordnete Verstärkungsrippen aufweist.

12. Verfahren zum Herstellen eines Mischers (3) aufweisend eine Längsrichtung (L), indem durch Spritzgiessen Mischelemente (3a) erzeugt werden, **dadurch gekennzeichnet, dass** eine Struktur von einer Mehrzahl über gegenseitige Faltstellen (3d) verbundene Mischelemente (3a) erzeugt wird, und dass die Struktur danach an den Faltstellen (3d) derart gefaltet wird, dass die Mischelemente (3a) entlang einer gemeinsamen Längsrichtung (L) nacheinander liegend angeordnet werden.

13. Verfahren nach Anspruch 12, **dadurch gekennzeichnet, dass** die während dem Spritzgiessen erzeugte Struktur eine Mehrzahl von in einer Ebene senkrecht zur Längsrichtung (L) angeordnete Mischelemente (3a) aufweist.

14. Verfahren nach Anspruch 12 oder 13, **dadurch gekennzeichnet, dass** Mischelemente (3a) mit einer Aussenwand (3c) erzeugt werden, und die Summe der in Längsrichtung (L) nacheinander liegend angeordneten Aussenwände (3c) die Aussenwand des Mischers (3) bildet.

15. Verfahren nach Anspruch 14, **dadurch gekennzeichnet, dass** die in Längsrichtung (L) nacheinander liegenden Aussenwände (3c) fluiddicht miteinander verbunden werden.

## Claims

1. A static mixer (1) including a mixer (3) having a plurality of mixing elements (3a) arranged after one another in the direction of a longitudinal axis (L), wherein mixing elements (3a) arranged after one another are mutually pivoted by 180 degrees in each case, **characterised in that** the mixing elements (3a) are mutually connected via a hinge (3d) and are mutually folded.

2. A static mixer in accordance with claim 1, **characterised in that** the mixing elements (3a) have a mixer structure (3b as well as an outer wall (3c); and **in that** the mixing elements (3a) are mutually connected via at least the outer wall (3c).

3. A static mixer in accordance with any one of the preceding claims, **characterised in that** the mixing elements (3a) have a mixer structure (3b) as well as an outer wall (3c); and **in that** the mixer structure (3b) is connected to the outer wall (3c).

4. A static mixer in accordance with claim 2 or claim 3, **characterised in that** the outer wall (3c) has connection surfaces with connection points (3e), with adjacently arranged mixing elements (3a) being mutually connected via the connection points (3e).

5. A static mixer in accordance with claim 4, **characterised in that** the connection points (3e) are designed extending conically.

6. A static mixer in accordance with one of the claims 4 or 5, **characterised in that** sealing lips (3o) are arranged at the connection points (3e).

7. A static mixer in accordance with any one of the claims 2 to 6, **characterised in that** the outer walls (3c) of adjacently arranged mixing elements (3a) are mutually connected in a fluid-tight manner.

8. A static mixer in accordance with any one of the claims 2 to 7, **characterised in that** at least some of the mixing elements (3a) have a different geometric design, with in particular at least some of the mixing elements (3a) having outer walls (3c) with different wall thicknesses and/or outer walls (3c) with reinforcement ribs.

9. A static mixer in accordance with any one of the preceding claims, **characterised in that** the mixing elements (3a) have longitudinal supports (3i) which are arranged such that the longitudinal supports (3i) transfer a force acting in the longitudinal direction (L) from one mixing element (3a) onto the mixing element (3a) arranged next following.

10. A static mixer including an outer casing (4) as well as a mixer (3) in accordance with any one of the preceding claims arranged therein.

11. A static mixer in accordance with claim 10, **characterised in that** the outer casing (4) has a reducing or increasing wall thickness in the direction of extent of the longitudinal axis (L) and/or reinforcement ribs arranged at the outer side.

12. A method for the manufacture of a mixer (3) having a longitudinal direction (L), in that mixing elements (3a) are produced by injection moulding, **characterised in that** a structure of a plurality of mixing elements (3a) connected via mutual hinges (3d) is produced; and **in that** the structure is then folded at the hinges (3d) such that the mixing elements (3a) are arranged lying after one another along a common longitudinal direction (L).

13. A method in accordance with claim 12, **characterised in that** the structure generated during the injection moulding has a plurality of mixing elements (3a) arranged in a plane perpendicular to the longitudinal direction (L).

14. A method in accordance with claim 12 or claim 13, **characterised in that** mixing elements (3a) having an outer wall (3c) are generated; and **in that** the sum of the outer walls (3c) arranged lying next to one another in the longitudinal direction (L) forms the outer wall of the mixer (3).

15. A method in accordance with claim 14, **characterised in that** the outer walls (3c) lying next to one another in the longitudinal direction (L) are connected to one another in a fluid-tight manner.

## Revendications

1. Mélangeur statique (1) comprenant un mélangeur (3) avec une pluralité d'éléments mélangeurs (3a) disposés les uns à la suite des autres dans la direction d'un axe longitudinal L, sachant que des éléments mélangeurs (3a) successivement disposés sont pivotés les uns par rapport aux autres chaque fois de 180 degrés, **caractérisé en ce que** les éléments mélangeurs (3a) sont reliés entre eux par l'intermédiaire d'un point de pliage (3d) et sont pliés les uns par rapport aux autres.

2. Mélangeur statique selon la revendication 1, **caractérisé en ce que** les éléments mélangeurs (3a) présentent une structure mélangeuse (3b) ainsi qu'une paroi extérieure (3c), et **en ce que** les éléments mélangeurs (3a) sont reliés entre eux au moins par l'intermédiaire de la paroi extérieure (3c).

3. Mélangeur statique selon l'une des revendications précédentes, **caractérisé en ce que** les éléments mélangeurs (3a) présentent une structure mélangeuse (3b) ainsi qu'une paroi extérieure (3c), et **en ce que** la structure mélangeuse (3b) est reliée à la paroi extérieure (3c).

4. Mélangeur statique selon la revendication 2 ou 3, **caractérisé en ce que** la paroi extérieure (3c) présente des surfaces de liaison avec des points de liaison (3e), sachant que des éléments mélangeurs (3a) disposés en voisinage sont reliés entre eux par l'intermédiaire des points de liaison (3e).

5. Mélangeur statique selon la revendication 4, **caractérisé en ce que** les points de liaison (3e) sont réalisés à allure conique.

6. Mélangeur statique selon l'une des revendications 4 ou 5, **caractérisé en ce que** des lèvres d'étanchéité (3o) sont disposées sur les points de liaison (3e).

7. Mélangeur statique selon l'une des revendications 2 à 6, **caractérisé en ce que** les parois extérieures (3c) d'éléments mélangeurs (3a) disposés en voisinage sont reliées entre elles en étanchéité aux fluides.

8. Mélangeur statique selon l'une des revendications 2 à 7, **caractérisé en ce qu'**au moins certains des éléments mélangeurs (3a) présentent une configuration géométrique différente, sachant notamment qu'au moins certains des éléments mélangeurs (3a) présentent des parois extérieures (3c) avec une épaisseur de paroi différente et/ou des parois extérieures (3c) avec des nervures de renforcement.

9. Mélangeur statique selon l'une des revendications précédentes, **caractérisé en ce que** les éléments mélangeurs (3a) présentent des supports longitudinaux (3i) qui sont disposés de telle sorte que les supports longitudinaux (3i) transmettent une force agissant dans la direction longitudinale (L) d'un élément mélangeur (3a) sur l'élément mélangeur (3a) disposé à la suite.

10. Mélangeur statique comprenant un manchon extérieur (4) ainsi qu'un mélangeur (3) disposé dans ce manchon, selon l'une des revendications précédentes.

11. Mélangeur statique selon la revendication 10, **caractérisé en ce que** le manchon extérieur (4) présente, dans la direction de développement de l'axe longitudinal (L), une épaisseur de paroi augmentant ou diminuant, et/ou des nervures de renforcement disposées sur le côté extérieur.

12. Procédé de fabrication d'un mélangeur (3) présentant une direction longitudinale (L), par le fait que des éléments mélangeurs (3a) sont produits par moulage par injection, **caractérisé en ce qu'**on produit une structure constituée d'une pluralité d'éléments mélangeurs (3a) reliés par l'intermédiaire de points de pliage réciproques (3d), et **en ce que** la structure est ensuite pliée au niveau des points de pliage (3d) de telle sorte que les éléments mélangeurs (3a) sont disposés en étant situés les uns à la suite des autres le long d'une direction longitudinale commune (L).

13. Procédé selon la revendication 12, **caractérisé en ce que** la structure produite pendant le moulage par injection présente une pluralité d'éléments mélangeurs (3a) disposés dans un plan perpendiculairement à la direction longitudinale (L).

14. Procédé selon la revendication 12 ou 13, **caractérisé en ce qu'**on produit des éléments mélangeurs (3a) avec une paroi extérieure (3c), et la somme des parois extérieures (3c) disposées en étant situées les unes à la suite des autres dans la direction longitudinale (L) forme la paroi extérieure du mélangeur (3).

15. Procédé selon la revendication 14, **caractérisé en ce que** les parois extérieures (3c) situées les unes à la suite des autres dans la direction longitudinale (L) sont reliées entre elles en étanchéité aux fluides.
